# EUROPÄISCHE PATENTSCHRIFT

(11) **EP 3 430 180 B1**
(45) Veröffentlichungstag und Bekanntmachung des Hinweises auf die Patenterteilung: **02.09.2020**
(21) Anmeldenummer: 17710218.3
(22) Anmeldetag: 10.03.2017
(51) Int. Cl.: C22C 38/04

(54) **VERFAHREN ZUR HERSTELLUNG EINES WARMUMGEFORMTEN STAHLBAUTEILS**
METHOD FOR PRODUCING A HOT-FORMED STEEL COMPONENT
PROCÉDÉ DE FABRICATION D'UNE PIÈCE EN ACIER FAÇONNÉE À CHAUD

(30) Priorität: 15.03.2016 DE 102016104800
(43) Veröffentlichungstag der Anmeldung: 23.01.2019
(73) Patentinhaber: Salzgitter Flachstahl GmbH, 38239 Salzgitter (DE)
(72) Erfinder: PALZER, Peter, 38704 Liebenburg (DE); EVERTZ, Thomas, 31228 Peine (DE); OTTO, Manuel, 38162 Cremlingen (DE); KÖHLER, Kai, 31171 Nordstemmen (DE)
(74) Vertreter: Moser Götze & Partner Patentanwälte mbB
(86) Internationale Anmeldenummer: PCT/EP2017/055623
(87) Internationale Veröffentlichungsnummer: WO 2017/157770

(56) Entgegenhaltungen:
- EP-A1- 2 778 247
- WO-A1-2014/180456
- CN-A- 104 726 762
- DE-B3-102013 010 946
- JP-A- 2007 016 296

## Beschreibung

Die Erfindung betrifft ein Verfahren zur Herstellung eines Bauteils durch Warmumformen eines Vorproduktes aus Stahl. Als Vorprodukte für die Warmumformung werden nachfolgend z. B. vom Coil geschnittene Bleche oder Platinenzuschnitte oder nahtlose bzw. geschweißte Rohre, die fallweise zusätzlich kaltgezogen sein können, verstanden.

Derartige durch Warmumformung hergestellte Bauteile werden hauptsächlich in der Automobil- und Nutzfahrzeugindustrie verwendet, aber auch im Maschinenbau zur Herstellung weißer Ware oder im Bauwesen bieten sich Einsatzmöglichkeiten.

Der heiß umkämpfte Markt zwingt die Automobilhersteller ständig nach Lösungen zur Senkung ihres Flottenverbrauches unter Beibehaltung eines höchstmöglichen Komforts und Insassenschutzes zu suchen. Dabei spielt einerseits die Gewichtsersparnis aller Fahrzeugkomponenten eine entscheidende Rolle andererseits aber auch ein möglichst günstiges Verhalten der einzelnen Bauteile bei hoher statischer und dynamischer Beanspruchung im Betrieb wie auch im Crashfall.

Darüber hinaus stellt die Reduzierung des CO₂-Ausstoßes entlang der gesamten Fertigungskette eine besondere Herausforderung dar, die durch innovative verfahrenstechnische Lösungen angenommen wird. Im Fokus stehen insbesondere Prozessschritte, die direkt oder indirekt auf der Verbrennung fossiler Brennstoffe basieren.

Dieser Notwendigkeit versuchen die Vormateriallieferanten dadurch Rechnung zu tragen, dass durch die Bereitstellung hoch- und höchstfester Stähle die Wanddicken reduziert werden können bei gleichzeitig verbessertem Bauteilverhalten bei der Fertigung und im Betrieb.

Diese Stähle müssen daher vergleichsweise hohen Anforderungen hinsichtlich Festigkeit, Dehnfähigkeit, Zähigkeit, Energieaufnahme und Korrosionsbeständigkeit sowie ihrer Verarbeitbarkeit beispielsweise bei der Kaltumformung und beim Schweißen genügen.

Unter den vorgenannten Aspekten gewinnt die Herstellung von Bauteilen aus warmumformbaren Stählen zunehmend an Bedeutung, da diese bei geringerem Materialaufwand die gestiegenen Anforderungen an die Bauteileigenschaften ideal erfüllen.

Die Herstellung von Bauteilen mittels Abschreckung von Vorprodukten aus presshärtbaren Stählen durch Warmumformen in einem Umformwerkzeug ist aus der Patentschrift DE 601 19 826 T2 bekannt. Hier wird eine zuvor oberhalb der Austenitisierungstemperatur auf 800 - 1200°C erwärmte und ggf. mit einem metallischen Überzug aus Zink oder auf Basis von Zink versehene Blechplatine in einem fallweise gekühlten Werkzeug durch Warmumformung zu einem Bauteil umgeformt, wobei während des Umformens oder nach dem Warmumformen durch schnellen Wärmeentzug das Blech bzw. Bauteil im Umformwerkzeug eine Abschreckhärtung (Presshärtung) erfährt und dadurch die geforderten Gefüge- und Festigkeitseigenschaften erreicht.

Der metallische Überzug wird als Korrosionsschutz üblicherweise im kontinuierlichen Schmelztauchverfahren auf ein Warm- oder Kaltband bzw. auf das daraus hergestellte Vorprodukt aufgebracht, z. B. als Feuerverzinkung oder Feueraluminierung.

Anschließend wird die Platine für das Umformwerkzeug der Warmumformung passend zugeschnitten. Möglich ist auch, das jeweils umzuformende Werkstück, bzw. den Zuschnitt, mit einem Schmelztauchüberzug zu versehen.

Das Aufbringen eines metallischen Überzugs auf das umzuformende Vorprodukt vor dem Warmumformen ist bei diesem Verfahren von Vorteil, weil durch den Überzug im Zuge der Presshärtung eine nachteilige Veränderung der Oberfläche des Stahlsubstrats durch Verzunderung des Grundmaterials und durch eine zusätzliche Schmierwirkung übermäßiger Werkzeugverschleiß wirksam vermieden werden kann.

Bekannte zum Presshärten geeignete Stähle für diesen Einsatzbereich sind z. B. der Mangan-Bor-Stahl "22MnB5".

Um Bauteile mit sehr hohen Festigkeiten von mehr als 980 MPa bei noch ausreichend hoher Zähigkeit zu erhalten, ist es aus der Offenlegungsschrift EP 2 546 375 A1 bekannt, einen Stahl mit einem im Ausgangszustand überwiegend ferritischen Gefüge mit Perlitanteilen mittels Pressformhärtung entsprechend umzuformen und durch eine stufenförmige Prozessführung ein Gefüge aus Bainit, angelassenem Martensit und Restaustenit am fertigen Bauteil einzustellen. Hierbei wird das umzuformende Blech zunächst auf eine Temperatur von 750 bis 1000°C erwärmt und auf dieser Temperatur 5 bis 1000 Sekunden gehalten, anschließend bei 350 bis 900°C umgeformt und auf 50 bis 350°C abgekühlt. Schließlich erfolgt eine Wiedererwärmung auf eine Temperatur von 350 bis 490°C, die in einem Zeitraum von 5 bis 1000 Sekunden gehalten wird. Das Gefüge am fertigen Bauteil besteht dabei aus 10 bis 85% Martensit, 5 bis 40% Restaustenit und mindestens 5% Bainit.

Die Offenlegungsschriften EP 2 778 247 A1, CN 104 726 762 A und JP 2007/16296 A offenbaren Verfahren zum Warmumformen von Stahlblechen bei erhöhten Temperaturen zwischen 500°C und 900°C.

Die Patentschrift DE 10 2013 010 946 B3 offenbart ein Verfahren zu Herstellung eines pressgehärteten Stahlblechbauteils bei Temperaturen oberhalb der Austenitisierungstemperatur.

Die Herstellung eines Bauteils durch Warmumformen mittels Presshärtung weist jedoch mehrere Nachteile auf.

Zum einen benötigt dieses Verfahren durch die Aufheizung des Vorproduktes auf Austenitisiertemperatur an sich sowie zusätzlich für die Umwandlung von Ferrit in Austenit sehr viel Energie, was das Verfahren teuer macht und zu einem erheblichen CO₂-Ausstoß führt.

Außerdem ist zur Vermeidung einer übermäßigen Verzunderung der Blechoberfläche, wie oben beschrieben, eine zusätzliche metallische Schutzschicht oder eine Schutzschicht auf Lackbasis erforderlich oder eine erhebliche Nacharbeit der durch Erwärmung und Umformung verzunderten Oberfläche notwendig.

Da die Umformung bei Temperaturen oberhalb der Ac₃-Temperatur in der Regel deutlich oberhalb 800°C erfolgt, werden zudem extrem hohe Anforderungen bezüglich der Temperaturstabilität an diese Schutzschichten gestellt, so dass ein kathodischer Korrosionsschutz des Vorproduktes auf einer Basis von Zink hier nur eingeschränkt und mit erhöhtem Verfahrensaufwand einsetzbar ist, da das Zink bei diesen hohen Temperaturen verdampft. Demzufolge werden zur Presshärtung vorwiegend Stahlbleche mit einer AISi-Beschichtung eingesetzt, die aber keinen kathodischen Korrosionsschutz des umgeformten Bauteils bietet.

Ein weiterer Nachteil ist, dass das umgeformte Bauteil im Umformwerkzeug selbst, einem weiteren Werkzeug außerhalb der Umformpresse oder unter Einsatz von gasförmigen oder flüssigen Medien beschleunigt abgekühlt werden muss, um die gewünschte Festigkeit zu erreichen. Die Dauer dieses Abkühlvorgangs reduziert den Durchsatz von Bauteilen pro Zeiteinheit deutlich, wodurch die Wirtschaftlichkeit herabgesetzt wird.

Zusammengefasst ist festzustellen, dass das bekannte Verfahren zur Herstellung von Bauteilen aus Stahl durch Warmumformung mittels Presshärten oberhalb der Austenitisierungstemperatur Ac₃ aufgrund der erforderlichen großen Erwärmöfen verbunden mit langen Aufheizzeiten und der abschließend notwendigen Abkühlung des Bauteils im Werkzeug zu hohen Fertigungs- und Energiekosten und damit hohen Bauteilkosten führt. Zudem kann kein kathodischer Korrosionsschutz durch Aufbringen einer Beschichtung vor dem Erwärmen und der Umformung gewährleistet werden.

Aus der Offenlegungsschrift DE 10 2011 108 162 A1 ist ein Verfahren zur Herstellung eines Bauteils durch Halbwarmumformen eines Vorproduktes aus Stahl unterhalb der Ac₁-Umwandlungstemperatur bekannt, bei dem die geforderte Festigkeitssteigerung im Bauteil durch eine Kaltumformung des Vorproduktes vor der Erwärmung auf Umformtemperatur erreicht wird. Wahlweise kann eine zusätzliche Festigkeitssteigerung im Bauteil durch Verwendung höherfester Werkstoffe, wie bainitische, martensitische, mikrolegierte und Dual- oder Mehrphasenstähle erreicht werden. Nachteilig ist hierbei der zusätzliche Aufwand durch die notwendige Kaltumformung vor der Erwärmung auf Umformtemperatur. Dualphasenstähle weisen bei der Warmumformung zudem den Nachteil einer Empfindlichkeit gegen kantenrissinduziertes Versagen während der Umformung auf. Hinweise auf konkret einzuhaltende Legierungszusammensetzungen oder Vorgaben für das Gefüge des Vorproduktes zur gezielten Einstellung der mechanischen Eigenschaften des Bauteils nach der Halbwarmumformung bei Einsatz höherfester Stähle werden nicht offenbart. Die Offenlegungsschrift DE 10 2013 009 232 A1 offenbart ein Verfahren zur Herstellung eines Bauteils durch Halbwarmumformen eines Vorproduktes aus Stahl, bei dem das Vorprodukt auf Umformtemperatur erwärmt und anschließend umgeformt wird, wobei das Bauteil nach der Umformung eine bainitische Gefügestruktur mit einer Mindestzugfestigkeit von 800 MPa aufweist. Die Erwärmung erfolgt auf eine Temperatur unterhalb der Ac₁-Umwandlungstemperatur, wobei schon das Vorprodukt aus einem Stahl mit einem Gefüge aus mindestens 50% Bainit besteht, und wobei das Vorprodukt folgende Legierungszusammensetzung in Gewichts-% aufweist: C: 0,02 bis 0,3; Si: 0,01 bis 0,5; Mn: 1,0 bis 3,0; P: max. 0,02; S: max. 0,01; N: max. 0,01; Al: bis 0,1; Cu: bis 0,2; Cr: bis 3,0; Ni: bis 0,2; Mo: bis 0,2; Ti: bis 0,2; V: bis 0,2; Nb: bis 0,1 und B: bis 0,01.

Obwohl mit diesem Legierungskonzept schon Bauteile mit sehr hoher Zugfestigkeit von über 800 MPa und einer Dehnung von über 10% hergestellt werden können und ein kathodischer Korrosionsschutz aus Zink realisierbar ist, erfüllt das Umformvermögen dieses Werkstoffs noch nicht höchste Anforderungen für die Herstellung komplexer Bauteilgeometrien. Insbesondere ist die erreichte Bruchdehnung sowie die Festigkeit noch für viele Anforderungen zu gering.
Aufgabe der Erfindung ist es, ein Verfahren zur Herstellung eines Bauteils durch Warmumformung eines Vorproduktes aus Stahl bei Temperaturen unterhalb des Ac₃-Umwandlungspunktes anzugeben, welches kostengünstig ist und mit dem im Bauteil bei zu erreichenden Mindestzugfestigkeiten von 700 MPa ein nochmals verbessertes Umformvermögen des Stahlwerkstoffs erreicht wird.

Ein erfindungsgemäßes Verfahren wird in den Ansprüchen 1 bis 13 angegeben.

Nach der Lehre der Erfindung wird diese Aufgabe durch ein Verfahren zur Herstellung eines Bauteils durch Warmumformen eines Vorproduktes aus Stahl gelöst, bei dem das Vorprodukt auf eine Temperatur oberhalb von 60°C und unterhalb 450°C erwärmt und anschließend umgeformt wird, wobei das Bauteil eine Mindestzugfestigkeit von 700 MPa bei einer Bruchdehnung A80 in % von über 22% aufweist, wobei das

Vorprodukt folgende Legierungszusammensetzung in Gewichts-% aufweist:
C: 0,0005 bis 0,9, insbesondere 0,05 bis 0,42
Mn: mehr als 3,0 bis 12, insbesondere > 5 bis < 10

Rest Eisen einschließlich unvermeidbarer stahlbegleitender Elemente, mit optionaler Zulegierung von einem oder mehreren der folgenden Elemente (in Gewichts-%):
Al: bis 10, insbesondere 0,1 bis 5, beziehungsweise > 0,5 bis 3
Si: bis 6, insbesondere 0,05 bis 3, beziehungsweise > 0,1 bis 1,5
Cr: bis 6, insbesondere 0,1 bis 4, beziehungsweise > 0,5 bis 2,5
Nb: bis 1,5, insbesondere 0,005 bis 0,4, beziehungsweise 0,01 bis 0,1
V: bis 1,5, insbesondere 0,005 bis 0,6, beziehungsweise 0,01 bis 0,3
Ti: bis 1,5, insbesondere 0,005 bis 0,6, beziehungsweise 0,01 bis 0,3
Mo: bis 3, insbesondere 0,005 bis 1,5, beziehungsweise 0,01 bis 0,6
Cu: bis 3, insbesondere < 0,5, beziehungsweise < 0,1
Sn: bis 0,5, insbesondere < 0,2, beziehungsweise < 0,05
W: bis 5, insbesondere 0,01 bis 3, beziehungsweise 0,2 bis 1,5
Co: bis 8, insbesondere 0,01 bis 5, beziehungsweise 0,3 bis 2
Zr: bis 0,5, insbesondere 0,005 bis 0,3, beziehungsweise 0,01 bis 0,2
Ta: bis 0,5, insbesondere 0,005 bis 0,3, beziehungsweise 0,01 bis 0,1
Te: bis 0,5, insbesondere 0,005 bis 0,3, beziehungsweise 0,01 bis 0,1
B: bis 0,15, insbesondere 0,001 bis 0,08, beziehungsweise 0,002 bis 0,01
P: max. 0,1, insbesondere <0,04
S: max. 0,1, insbesondere <0,02
N: max. 0,1, insbesondere <0,05
Ca: bis 0,1, insbesondere 0,005 bis 0,1
wobei der Restaustenitanteil 5 % bis 80 % beträgt.

Der für das erfindungsgemäße Verfahren eingesetzte Stahl weist ein mehrphasiges Gefüge, bestehend aus Ferrit und/oder Martensit und/oder Bainit sowie Restaustenit auf. Der Restaustenitanteil beträgt 5 % bis 80 %. Der Restaustenit kann bei Anliegen mechanischer Spannungen durch den TRIP-Effekt teilweise oder vollständig in Martensit umwandeln. Die erfindungsgemäße Legierung weist bei entsprechender mechanischer Beanspruchung einen TRIP- und/oder TWIP-Effekt auf. Wegen der durch den TRIP und/oder TWIP-Effekt und durch die Erhöhung der Versetzungsdichte induzierten starken Verfestigung (analog einer Kaltverfestigung) erreicht der Stahl sehr hohe Werte an Bruchdehnung, insbesondere an Gleichmaßdehnung, und Zugfestigkeit. Vorteilhaft wird diese Eigenschaft durch den vorhandenen Restaustenit erst bei Mangangehalten von über 3 Gewichts-% erreicht.
Die Verwendung des Begriffs "bis" in den Definitionen der Gehaltsbereiche, wie beispielsweise 0,01 bis 1 Gewichts-%, bedeutet, dass die Eckwerte - im Beispiel 0,01 und 1 - mit eingeschlossen sind.

Der so hergestellte Stahl eignet sich insbesondere zur Herstellung komplex geformter Bauteile durch Halbwarmumformung, die neben einem sehr guten Umformvermögen während der Umformung, eine hohe Festigkeit und Bruchdehnung im Betriebszustand aufweisen und vorteilhaft mit einem zinkbasierten kathodischen Korrosionsschutz versehen werden.
In vorteilhafter Weise weist der Stahl im Ausgangszustand eine Zugfestigkeit Rm von > 700 bis 2000 MPa auf bei einer Bruchdehnung A₈₀ in Abhängigkeit von der erreichten Zugfestigkeit von mindestens 3 bis 40%.
Das erfindungsgemäße Verfahren weist gegenüber dem aus der DE 601 19 826 T2 oder der EP 2 546 375 A1 bekannten Verfahren zur Herstellung eines Bauteils mittels Presshärtung den Vorteil auf, dass bei deutlich geringerem Energiebedarf für die Erwärmung durch den Einsatz eines im Ausgangszustand mehrphasigen Stahls mit Restaustenit ein Bauteil mit mechanischen Kennwerten von Zugfestigkeit und Bruchdehnung bereitgestellt wird, die deutlich besser sind, als die mechanischen Eigenschaften der Bauteile aus bekannten Stählen für die Halbwarmumformung. Zusätzlich werden durch niedrigere Aufheiztemperaturen im Vergleich zur Presshärtung Energiekosten eingespart.
Der mittelmanganhaltige Stahl mit einem Mangangehalt von über 3 Gewichts-% wird als Flachprodukt (Warm- oder Kaltband) oder als nahtloses oder geschweißtes Rohr mit einer Korrosionsschutzschicht (Zn, Zn-Legierungen, anorganische oder organische Beschichtungen mit Zn, AISi oder sonstige anorganische oder organische Beschichtungen) versehen und anschließend halbwarm umgeformt (HWU). Als halbwarm wird hierbei eine Umformung nach einer Erwärmung des Vorproduktes auf eine Temperatur < 700 °C, vorzugsweise < 450 °C, weiterhin bevorzugt < 350 °C bis 60 °C bezeichnet, bei der der Austenitanteil im Vorprodukt ganz oder teilweise während der Umformung erhalten bleibt und ein eventuell einsetzender TRIP-Effekt ganz oder teilweise unterdrückt wird. Eine Erwärmung auf < 450 °C, bevorzugt bei < 350 °C, ermöglicht die Verwendung eines kathodischen Korrosionsschutzes auf Zinkbasis.

Das Halbwarmumformen verbessert des Weiteren die Umformeigenschaften im Vergleich zum Umformen bei RT und erhöht vorteilhaft den Widerstand gegenüber Wasserstoffversprödung und verzögerter Rissbildung. Die Abkühlung erfolgt an ruhender Luft, bedarf im Vergleich zum Presshärten also keiner beschleunigten und /oder geregelten Abkühlung.

Das Bauteil kann optional nach dem Halbwarmumformen mittels Luftstrom, Öl, Wasser oder sonstigen Wirkmedien technisch beschleunigt abgekühlt werden.

Das Vorprodukt und das daraus gefertigte warmumgeformte Bauteil weisen vor und nach dem Halbwarmumformen eine Zugfestigkeit von 700 bis 2000 MPa, bevorzugt 850 bis 1800 MPa, insbesondere bevorzugt > 1000 bis 1800 MPa bei Dehnungen A₈₀ von > 3 bis 40 %, bevorzugt > 6 bis 30 % auf. Höhere geforderte Dehnungen ergeben dabei tendenziell niedrigere Festigkeiten und umgekehrt.

Als maßgebend für die Charakterisierung dieser Bauteileigenschaften kann daher das Produkt aus geforderter Zugfestigkeit und erreichter Bruchdehnung (Rm x A₈₀) angesehen werden.

Versuche am fertigen Bauteil, also nach der Warmumformung, zeigen dabei vorteilhaft folgende hervorragende Ergebnisse für das Produkt aus Rm x A₈₀ in MPa%:
Rm von 700 bis 800 MPa: Rm x A₈₀ ≥ 15400 bis zu 50000
Rm von über 800 bis 900 MPa: Rm x A₈₀ ≥ 14400 bis zu 50000
Rm von über 900 bis 1100 MPa: Rm x A₈₀ ≥ 13500 bis zu 45000
Rm von über 1100 bis 1200 MPa: Rm x A₈₀ ≥ 13200 bis zu 45000
Rm von über 1200 bis 1350 MPa: Rm x A₈₀ ≥ 11200 bis zu 45000
Rm von über 1350 bis 1800 MPa: Rm x A₈₀ ≥ 8000 bis zu 45000
Rm von über 1800 MPa: Rm x A₈₀ ≥ 4000 bis zu 30000

Das Erwärmen des halbwarm umzuformenden Materials erfolgt bevorzugt induktiv oder alternativ durch Strahlung oder konduktiv. Optional erfolgt das Erwärmen des Materials vor dem Halbwarmumformen direkt im Umformwerkzeug, wodurch ein zusätzliches Ofenaggregat eingespart und ein Prozessschritt weggelassen werden kann. Dies kommt insbesondere bei Erwärmtemperaturen von < 450 °C, vorzugsweise < 350 °C, in Betracht.

Die kundenseitige Forderung nach einem kathodischen Korrosionsschutz in Verbindung mit hochfesten Stählen mit geforderten Zugfestigkeiten Rm von bis zu 1500 MPa kann somit vorteilhaft durch Halbwarmumformen des erfindungsgemäßen mit mehr als 3 bis 12 Gewichts-% Mangan enthaltenen Stählen erfüllt werden. Des Weiteren bewirkt die Erwärmtemperatur unterhalb Ac₃ vorteilhaft einen nur geringen Festigkeitsabfall im Vorprodukt bei gleichzeitig verbesserten Umformeigenschaften, im Vergleich zur Umformung bei RT, bei der der TRIP/TWIP-Effekt einsetzen würde. Aufgrund der fehlenden oder aber einer nur teilweisen Umwandlung des Gefüges nach der Halbwarmumformung tritt nur ein geringer Verzug der Bauteile während der Abkühlung auf.

Weiterhin sind Energieeinsparpotentiale und eine Reduzierung der CO₂-Emmission bei der Halbwarmumformung im Vergleich zum Presshärten bei Temperaturen oberhalb Ac₃ umsetzbar.

Besonders gleichmäßige und homogene Werkstoffeigenschaften können erreicht werden, wenn der Stahl des Vorproduktes folgende Legierungszusammensetzung in Gewichts-% aufweist:
C: 0,05 bis 0,42
Mn: > 5 bis < 10

Rest Eisen einschließlich unvermeidbarer stahlbegleitender Elemente, mit optionaler Zulegierung von einem oder mehreren der folgenden Elemente (in Gewichts-%):
Al: 0,1 bis 5, insbesondere > 0,5 bis 3
Si: 0,05 bis 3, insbesondere > 0,1 bis 1,5
Cr: 0,1 bis 4, insbesondere > 0,5 bis 2,5
Nb: 0,005 bis 0,4, insbesondere 0,01 bis 0,1
B: 0,001 bis 0,08, insbesondere 0,002 bis 0,01
Ti: 0,005 bis 0,6, insbesondere 0,01 bis 0,3
Mo: 0,005 bis 1,5, insbesondere 0,01 bis 0,6
Sn: < 0,2, insbesondere < 0,05
Cu: < 0,5, insbesondere < 0,1
W: 0,01 bis 3, insbesondere 0,2 bis 1,5
Co: 0,01 bis 5, insbesondere 0,3 bis 2
Zr: 0,005 bis 0,3, insbesondere 0,01 bis 0,2
Ta: 0,005 bis 0,3, insbesondere 0,01 bis 0,1
Te: 0,005 bis 0,3, insbesondere 0,01 bis 0,1
V: 0,005 bis 0,6, insbesondere 0,01 bis 0,3
Ca: 0,005 bis 0,1

Legierungselemente werden dem Stahl in der Regel zugegeben, um gezielt bestimmte Eigenschaften zu beeinflussen. Dabei kann ein Legierungselement in verschiedenen Stählen unterschiedliche Eigenschaften beeinflussen. Die Wirkung und Wechselwirkung hängt im Allgemeinen stark von der Menge, der Anwesenheit weiterer Legierungselemente und dem Lösungszustand im Werkstoff ab. Die Zusammenhänge sind vielseitig und komplex. Im Folgenden soll auf die Wirkung der Legierungselemente in der erfindungsgemäßen Legierung näher eingegangen werden. Nachfolgend werden die positiven Effekte der erfindungsgemäß verwendeten Legierungselemente beschrieben:
Kohlenstoff C: Wird benötigt zur Bildung von Karbiden, stabilisiert den Austenit und erhöht die Festigkeit. Höhere Gehalte an C verschlechtern die Schweißeigenschaften und führen zur Verschlechterung der Dehnungs- und Zähigkeitseigenschaften, weshalb ein maximaler Gehalt von 0,9 Gewichts-% festgelegt wird. Der Mindestgehalt wird mit 0,0005 Gewichts-% festgelegt. Vorzugsweise wird ein Gehalt von 0,05 bis 0,42 Gewichts-% festgelegt, da in diesem Bereich das Verhältnis von Restaustenit zu anderen Phasenanteilen besonders vorteilhaft eingestellt werden kann.

Mangan Mn: Stabilisiert den Austenit, erhöht die Festigkeit und die Zähigkeit und ermöglicht eine verformungsinduzierte Martensit- und/oder Zwillingsbildung in der erfindungsgemäßen Legierung. Gehalte kleiner gleich 3 Gewichts-% sind nicht ausreichend zur Stabilisierung des Austenits und verschlechtern somit die Dehnungseigenschaften, während bei Gehalten von 12 Gewichts-% und mehr der Austenit zu stark stabilisiert wird und dadurch die Festigkeitseigenschaften, insbesondere die Streckgrenze, verringert werden. Für den erfindungsgemäßen Manganstahl mit mittleren Mangangehalten wird ein Bereich von über 5 bis < 10 Gewichts-% bevorzugt, da in diesem Bereich das Verhältnis der Phasenanteile zueinander und die Umwandlungsmechanismen während der Halbwarm- und Kaltumformung vorteilhaft beeinflusst werden können.

Aluminium Al: Verbessert die Festigkeits- und Dehnungseigenschaften, senkt die spezifische Dichte und beeinflusst das Umwandlungsverhalten der erfindungsgemäßen Legierung. Gehalte an Al von mehr als 10 Gewichts-% verschlechtern die Dehnungseigenschaften und bewirken ein überwiegend sprödes Bruchverhalten. Für den erfindungsgemäßen Manganstahl mit mittleren Mangangehalten wird ein Al-Gehalt von 0,1 bis 5 Gewicht-% bevorzugt, um die Festigkeit bei gleichzeitig guter Dehnung zu erhöhen. Insbesondere Gehalte von > 0,5 bis 3 Gewichts-% ermöglichen ein besonders großes Produkt von Festigkeit und Bruchdehnung.

Silizium Si: Behindert die Kohlenstoffdiffusion, verringert die spezifische Dichte und erhöht die Festigkeit und die Dehnungs- sowie Zähigkeitseigenschaften. Gehalte von mehr als 6 Gewichts-% verhindern eine Weiterverarbeitung durch Kaltwalzen aufgrund einer Versprödung des Werkstoffs. Daher wird ein maximaler Gehalt von 6 Gewichts-% festgelegt. Optional wird ein Gehalt von 0,05 bis 3 Gewichts-% festgelegt, da Gehalte in diesem Bereich die Umformeigenschaften positiv beeinflussen. Als besonders vorteilhaft für die Umform- und Umwandlungseigenschaften haben sich Si-Gehalte von > 0,1 bis 1,5 Gewichts-% herausgestellt.

Chrom Cr: Verbessert die Festigkeit und verringert die Korrosionsrate, verzögert die Ferrit- und Perlitbildung und bildet Karbide. Der maximale Gehalt wird mit 6 Gewichts-% festgelegt, da höhere Gehalte eine Verschlechterung der Dehnungseigenschaften und wesentlich höhere Kosten zur Folge haben. Für den erfindungsgemäßen Manganstahl mit mittleren Mangangehalten wird ein Cr-Gehalt von 0,1 bis 4 Gewicht-% bevorzugt, um die Ausscheidung grober Cr-Karbide zu vermindern. Insbesondere Gehalte von > 0,5 bis 2,5 Gewichts-% haben sich als vorteilhaft für die Stabilisierung des Austenits und die Ausscheidung feiner Cr-Karbide erwiesen.

Molybdän Mo: Wirkt als Karbidbildner, erhöht die Festigkeit und erhöht den Widerstand gegenüber verzögerter Rissbildung und Wasserstoffversprödung. Gehalte an Mo von über 3 Gewichts-% verschlechtern die Dehnungseigenschaften, weshalb ein Maximalgehalt von 3 Gewichts-% festgelegt wird. Für den erfindungsgemäßen Manganstahl mit mittleren Mangangehalten wird ein Mo-Gehalt von 0,005 bis 1,5 Gewicht-% bevorzugt, um die Ausscheidung zu großer Mo-Karbide zu vermeiden. Insbesondere Gehalte von 0,01 Gewichts-% bis 0,6 Gewichts-% bewirken die Ausscheidung gewünschter Mo-Karbide bei gleichzeitig verringerten Legierungskosten.

Phosphor P: Ist ein Spurenelement aus dem Eisenerz und wird im Eisengitter als Substitutionsatom gelöst. Phosphor steigert durch Mischkristallverfestigung die Härte und verbessert die Härtbarkeit. Es wird allerdings in der Regel versucht, den Phosphorgehalt soweit wie möglich abzusenken, da er unter anderem durch seine geringe Diffusionsgeschwindigkeit stark seigerungsanfällig ist und im hohen Maße die Zähigkeit vermindert. Durch die Anlagerung von Phosphor an den Korngrenzen können Risse entlang der Korngrenzen beim Warmwalzen auftreten. Zudem setzt Phosphor die Übergangstemperatur von zähem zu sprödem Verhalten um bis zu 300 °C herauf. Aus vorgenannten Gründen ist der Phosphorgehalt auf maximal 0,1 Gewichts-% begrenzt, wobei Gehalte von < 0,04 Gewichts-% aus oben genannten Gründen vorteilhaft angestrebt werden.

Schwefel S: Ist wie Phosphor als Spurenelement im Eisenerz gebunden. Er ist im Stahl im Allgemeinen unerwünscht, da er zu starker Seigerung neigt und stark versprödend wirkt, wodurch die Dehnungs- und Zähigkeitseigenschaften verschlechtert werden. Es wird daher versucht, möglichst geringe Mengen an Schwefel in der Schmelze zu erreichen (z. B. durch eine Tiefvakuumbehandlung). Aus vorgenannten Gründen ist der Schwefelgehalt auf maximal 0,1 Gewichts-% begrenzt. Insbesondere vorteilhaft ist die Begrenzung des S-Gehalts auf < 0,2 Gewichts-%, um die Ausscheidung von MnS zu vermindern.

Stickstoff N: N ist ebenfalls ein Begleitelement aus der Stahlherstellung. Er verbessert im gelösten Zustand bei höher manganhaltigen Stählen mit größer gleich 4% Gewichts-% Mn die Festigkeits- und Zähigkeitseigenschaften. Niedriger Mn-legierte Stähle < 4 Gewichts-% mit freiem Stickstoff neigen zu einem starken Alterungseffekt. Der Stickstoff diffundiert schon bei geringen Temperaturen an Versetzungen und blockiert diese. Er bewirkt damit einen Festigkeitsanstieg verbunden mit einem rapiden Zähigkeitsverlust. Ein Abbinden des Stickstoffes in Form von Nitriden ist beispielsweise durch Zulegieren von Aluminium, Vanadium, Niob oder Titan möglich. Aus vorgenannten Gründen ist der Stickstoffgehalt auf maximal 0,1 Gewichts-% begrenzt, wobei Gehalte von < 0,05 Gewichts-% zur weitgehenden Vermeidung der Bildung von AIN bevorzugt angestrebt werden.

Mikrolegierungselemente werden in der Regel nur in sehr geringen Mengen zugegeben (< 0,1 Gewichts-% pro Element). Sie wirken im Gegensatz zu den Legierungselementen hauptsächlich durch Ausscheidungsbildung, können aber auch in gelöstem Zustand die Eigenschaften beeinflussen. Trotz der geringen Mengenzugaben beeinflussen Mikrolegierungselemente die Herstellungsbedingungen sowie die Verarbeitungs- und Endeigenschaften stark.

Typische Mikrolegierungselemente sind Vanadium, Niob und Titan. Diese Elemente können im Eisengitter gelöst werden und bilden mit Kohlenstoff und Stickstoff Carbide, Nitride und Carbonitride.

Vanadium V und Niob Nb: Diese wirken insbesondere durch die Bildung von Karbiden kornfeinend, wodurch gleichzeitig die Festigkeit, Zähigkeit und Dehnungseigenschaften verbessert werden. Gehalte von über 1,5 Gewichts-% bringen keine weiteren Vorteile. Für Vanadium und Niob wird optional bevorzugt ein Mindestgehalt von größer gleich 0,005 Gewichts-% und ein Maximalgehalt von 0,6 (V) bzw. 0,4 (Nb) Gewichts-% vorgesehen, in welchem die Legierungselemente vorteilhaft eine Kornfeinung bewirken. Zur Verbesserung der Wirtschaftlichkeit bei gleichzeitig optimaler Kornfeinung können die Gehalte an V weiterhin auf 0,01 Gewichts-% bis 0,3 Gewichts-% und die Gehalte an Nb auf 0,01 bis 0,1 Gewichts-% eingeschränkt werden.

Tantal Ta: Tantal wirkt ähnlich wie Niob als Karbidbildner kornfeinend und verbessert dadurch gleichzeitig die Festigkeit, Zähigkeit und Dehnungseigenschaften. Gehalte von über 0,5 Gewichts-% bewirken keine weitere Verbesserung der Eigenschaften. Daher wird optional ein Maximalgehalt von 0,5 Gewichts-% festgelegt. Bevorzugt werden ein Minimalgehalt von 0,005 und ein Maximalgehalt von 0,3 Gewichts-% festgelegt, in welchem die Kornfeinung vorteilhaft bewirkt werden kann. Zur Verbesserung der Wirtschaftlichkeit und Optimierung der Kornfeinung wird insbesondere bevorzugt ein Gehalt von 0,01 Gewichts-% bis 0,1 Gewichts-% angestrebt.

Titan Ti: Wirkt als Karbidbildner kornfeinend, wodurch gleichzeitig die Festigkeit, Zähigkeit und Dehnungseigenschaften verbessert werden und vermindert die interkristalline Korrosion. Gehalte an Ti von über 1,5 Gewichts-% verschlechtern die Dehnungseigenschaften, weshalb ein Maximalgehalt an Ti von 1,5 Gewichts-% festgelegt wird. Optional wird ein Mindestgehalt von 0,005 und ein Maximalgehalt von 0,6 Gewichts-% festgelegt, in welchem Ti vorteilhaft ausgeschieden wird. Bevorzugt wird ein Minimalgehalt von 0,01 Gewichts-% und ein Maximalgehalt von 0,3 Gewichts-% vorgesehen, welche ein optimales Ausscheidungsverhalten bei geringen Legierungskosten gewährleisten.

Zinn Sn: Zinn steigert die Festigkeit, reichert sich jedoch ähnlich Kupfer bei höheren Temperaturen unter der Zunderschicht und an den Korngrenzen an. Es führt durch Eindringen in die Korngrenzen zur Bildung niedrig schmelzender Phasen und damit verbunden zu Rissen im Gefüge und zu Lotbrüchigkeit, weshalb optional ein Maximalgehalt von kleiner gleich 0,5 Gewichts-% vorgesehen wird. Bevorzugt werden aus oben genannten Gründen Gehalte kleiner 0,2 Gewichts-% eingestellt. Insbesondere vorteilhaft zur Vermeidung niedrig schmelzender Phasen und Rissen im Gefüge werden Gehalte von < 0,05 Gewichts-% bevorzugt.

Kupfer Cu: Verringert die Korrosionsrate und steigert die Festigkeit. Gehalte von 3 Gewichts-% und mehr verschlechtern die Herstellbarkeit durch Bildung niedrig schmelzender Phasen beim Vergießen und Warmwalzen weshalb ein Maximalgehalt von 3 Gewichts-% festgelegt wird. Optional wird ein Maximalgehalt von kleiner 0,5 Gewichts-% festgelegt, bei welchem das Auftreten von Rissen beim Gießen und Warmwalzen vorteilhaft verhindert werden kann. Als insbesondere vorteilhaft zur Vermeidung niedrig schmelzender Phasen und zur Vermeidung von Rissen haben sich Cu-Gehalte von < 0,1 Gewichts-% herausgestellt.

Wolfram W: Wirkt als Karbidbildner und erhöht die Festigkeit und Warmfestigkeit. Gehalte an W von über 5 Gewichts-% verschlechtern die Dehnungseigenschaften, weshalb ein Maximalgehalt von 5 Gewichts-% W festgelegt wird. Optional wird ein Maximalgehalt von 3 Gewichts-% und ein Minimalgehalt von 0,01 Gewichts-% festgelegt, in welchem vorteilhaft die Ausscheidung von Karbiden stattfindet. Insbesondere bevorzugt wird ein Minimalgehalt von 0,2 Gewichts-% und ein Maximalgehalt von 1,5 Gewichts-% vorgesehen, welcher ein optimales Ausscheidungsverhalten bei niedrigen Legierungskosten ermöglicht.

Kobalt Co: Erhöht die Festigkeit des Stahls, stabilisiert den Austenit und verbessert die Warmfestigkeit. Gehalte von über 8 Gewichts-% verschlechtern die Dehnungseigenschaften, weshalb ein Maximalgehalt von 8 Gewichts-% festgelegt wird. Optional wird ein Maximalgehalt von kleiner gleich 5 Gewichts-% und ein Minimalgehalt von 0,01 Gewichts-% festgelegt, in welche die Festigkeit und Warmfestigkeit vorteilhaft verbessern. Bevorzugt wird ein Minimalgehalt von 0,3 Gewichts-% und ein Maximalgehalt von 2 Gewichts-% vorgesehen, welcher neben den Festigkeitseigenschaften die Austenitstabilität vorteilhaft beeinflusst.

Zirkonium Zr: Wirkt als Karbidbildner und verbessert die Festigkeit. Gehalte an Zr von über 0,5 Gew-% verschlechtern die Dehnungseigenschaften, weshalb ein Maximalgehalt von 0,5 Gewichts-% festgelegt wird. Optional wird ein Maximalgehalt von 0,3 Gewichts-% und ein Minimalgehalt von 0,005 Gewichts-% festgelegt, in welchem vorteilhaft Karbide ausgeschieden werden. Bevorzugt wird ein Minimalgehalt von 0,01 Gewichts-% und ein Maximalgehalt von 0,2 Gewichts-% vorgesehen, welche vorteilhaft eine optimale Karbidausscheidung bei niedrigen Legierungskosten ermöglichen.

Bor B: Verzögert die Austenitumwandlung, verbessert die Warmumformeigenschaften von Stählen und erhöht die Festigkeit bei Raumtemperatur. Es entfaltet seine Wirkung bereits bei sehr geringen Legierungsgehalten. Gehalte oberhalb 0,15 Gewichts-% verschlechtern die Dehnungs- und Zähigkeitseigenschaften stark, weshalb der Maximalgehalt auf 0,15 Gewichts-% festgelegt wird. Optional wird ein Minimalgehalt von 0,001 Gewichts-% und ein Maximalgehalt von 0,08 Gewichts-% festgelegt, in welchem die festigkeitssteigernde Wirkung von Bor vorteilhaft genutzt wird. Weiterhin wird ein Minimalgehalt von 0,002 Gewichts-% und ein Maximalgehalt von 0,01 Gewichts-% bevorzugt, welche eine optimale Nutzung zur Festigkeitssteigerung bei gleichzeitiger Verbesserung des Umwandlungsverhaltens ermöglichen.

Tellur Te: Verbessert die Korrosionsbeständigkeit und die mechanischen Eigenschaften sowie die Bearbeitbarkeit. Des Weiteren erhöht Te die Festigkeit von MnS, welches dadurch beim Warm- und Kaltwalzen weniger stark in Walzrichtung gelängt wird. Gehalte oberhalb 0,5 Gewichts-% verschlechtern die Dehnungs- und Zähigkeitseigenschaften, weshalb ein Maximalgehalt von 0,5 Gewichts-% festgelegt wird. Optional wird ein Minimalgehalt von 0,005 Gewichts-% und ein Maximalgehalt von 0,3 Gewichts-% festgelegt, welche mechanischen Eigenschaften vorteilhaft verbessern und die Festigkeit vorhandener MnS erhöht. Weiterhin wird ein Minimalgehalt von 0,01 Gewichts-% und ein Maximalgehalt von 0,1 Gewichts-% bevorzugt, welche eine Optimierung der mechanischen Eigenschaften bei gleichzeitiger Reduktion der Legierungskosten ermöglichen.

Kalzium Ca: Wird zur Modifikation nichtmetallischer oxidischer Einschlüsse genutzt, welche sonst zu einem unerwünschten Versagen der Legierung durch Einschlüsse im Gefüge, welche als Spannungskonzentrationsstellen wirken und den Metallverbund schwächen, führen könnten. Des Weiteren verbessert Ca die Homogenität der erfindungsgemäßen Legierung. Um eine entsprechende Wirkung zu entfalten, ist optional ein Mindestgehalt von 0,0005 Gewichts-% notwendig. Gehalte von oberhalb 0,1 Gewichts-% Ca bringen keinen weiteren Vorteil bei der Einschlussmodifikation, verschlechtern die Herstellbarkeit und sollten aufgrund des hohen Dampfdrucks von Ca in Stahlschmelzen vermieden werden. Daher ist ein Maximalgehalt von 0,1 Gewichts-% vorgesehen.

Typische Anwendungen erfindungsgemäß warmumgeformter Bauteile, hergestellt aus Blechen oder Rohren als Vorprodukte sind insbesondere der Automobilbau aber beispielsweise auch der Mobilkranbau sowie Längs- und Querträger in Lastwagen und Anhängern oder Sicherheits- und Fahrwerksteile im Pkw und der Waggonbau. Die erfindungsgemäß warmumgeformten Bauteile eignen sich generell zur Verwendung in der Automobil- und Nutzfahrzeugindustrie, im Maschinenbau, im Bauwesen oder zur Herstellung weißer Ware.

Als Vorprodukt kann beispielsweise eine Blechplatine oder ein Rohr verwendet werden. Die Blechplatine kann aus Warmband oder Kaltband gefertigt sein und das Rohr kann ein nahtlos warmgewalztes oder ein aus Warm- oder Kaltband hergestelltes geschweißtes Rohr sein.

Das warmgewalzte oder geschweißte Rohr kann nach der Herstellung nochmals mit einem oder mehrfachen Zieh- und/oder Glühprozessen oder in einem hydraulischen Aufweiteprozess, zum Beispiel mittels Innenhochdruckumformung (IHU) halbwarm umgeformt werden.

Zudem ist es erfindungsgemäß vorteilhaft möglich, die einzelnen Umformschritte mit unterschiedlichen Geschwindigkeiten und bei unterschiedlichen Temperaturen innerhalb des erfindungsgemäßen Temperaturbereichs durchzuführen. So ist es beispielsweise möglich, die martensitische Umwandlung in den ersten Schritten zur Verbesserung der Umformeigenschaften und Erleichterung der weiteren Umformung vorteilhaft zu verhindern und im letzten Umformschritt einen Temperaturbereich zu wählen, welcher eine teilmartensitische Umwandlung des Gefüges mit dem Ziel der Festigkeitssteigerung ermöglicht. Des Weiteren ist es vorteilhaft möglich, mehrere Umformvorgänge mit weniger Zwischenerwärmungen und somit in einem erweiterten Temperaturbereich durchzuführen, wodurch die Anzahl der Zwischenerwärmungen vorteilhaft reduziert werden kann. Unterschiedliche Umformgeschwindigkeiten ermöglichen analog eine gezielte Beeinflussung der martensitischen Umwandlung und der Spannungsverteilung im Bauteil.

Des Weiteren kann erfindungsgemäß vorteilhaft auch ein mehrstufiges Verfahren durchgeführt werden, bei dem sich dem Halbwarmumformprozess ein abschließende Kaltumformung (bspw. Walzen, Pressen, Tiefziehen, inkrementelles Umformen) anschließt, wodurch ein insgesamt höheres Umformvermögen im Vergleich zum alleinigen Kaltumformen realisiert werden kann.

Das Vorprodukt und das daraus hergestellte Bauteil zeichnen sich durch eine sehr hohe Zugfestigkeit bei einer ausreichend hohen Dehnung aus. Aufgrund der chemischen Zusammensetzung ist zudem eine gute Schweißbarkeit gegeben.

Das Vorprodukt kann weiterhin in bekannter Weise mit einer zunder- bzw. korrosionshemmenden Schicht auf Lackbasis oder mit einem metallischen Überzug versehen sein. Der metallische Überzug kann Zink und/oder Magnesium und/oder Aluminium und/oder Silizium enthalten. Ein Rohr als Vorprodukt kann dabei sowohl auf der Innen- als auch auf der Außenseite beschichtet sein.

Im Gegensatz zu gängigen Fertigungsrouten kann bereits oberflächenveredeltes Warm- oder Kaltband oder Rohr für die Umformung im Anschluss an eine Erwärmung eingesetzt werden, da die Haftung und die Duktilität eine Halbwarmumformung erträgt. Der metallische Überzug ist gegen kurzzeitige Wiedererwärmungen der Kombination Substrat/Beschichtung (Stahlband/Beschichtung) unterhalb der Ac₃-Temperatur des Substrats resistent, um die Wiedererwärmung vor der Halbwarmformung und die eigentliche Halbwarmformung zu überstehen.

Aufgrund der vergleichsweise geringen Wärmemenge kann auf großräumige Wiedererwärmungsaggregate, wie z. B. auf Tunnelöfen oder Kammeröfen, zugunsten schnell und direkt wirkender Systeme (induktiv, konduktiv, direkt im Werkzeug und insbesondere Strahlung) verzichtet werden.

Außerdem wird für das beschriebene neue Verfahren erheblich weniger Wärmeenergie benötigt, bzw. der energetische Wirkungsgrad ist höher als beim Presshärten. Dadurch sind die Prozesskosten geringer und der CO₂ Ausstoß wird reduziert. Im Gegensatz zu presshärtbaren Stählen kann je nach Anwendungsfall auf eine technische beschleunigte Abkühlung im Werkzeug vorteilhaft verzichtet werden, wodurch sich der Durchsatz an Halbzeugen pro Umformwerkzeug deutlich erhöht. Eine eventuell notwendige technisch beschleunigte Abkühlung kann außerhalb des Werkzeugs erfolgen.

Bevorzugt erfolgt die Wiedererwärmung vor dem Halbwarmformen mittels Induktion, da hier der energetische Wirkungsgrad hoch und die Erwärmdauer kurz ist. Des Weiteren kann vorteilhaft eine Erwärmung mittels Strahlung erfolgen, da hierbei analog der Wirkungsgrad deutlich höher ist als bei einer Erwärmung in einem Ofen oder bei konduktiver Erwärmung und der Energieeintrag in das Material je nach Oberflächenbeschaffenheit schneller und effektiver erfolgt.

Der Werkstoff ist auch sehr gut für eine partielle Erwärmung geeignet. Durch den Einsatz von z. B. Strahlern können gezielt einzelne Bereiche des umzuformenden Vorprodukts erwärmt werden, um umformbarkeitsoptimierte Zonen zu erhalten und die Festigkeit lokal durch den Anteil des durch den TRIP-Effekt umgewandelten Martensits einzustellen. Dies ermöglicht vorteilhaft die Nutzung von konventionellen Pressen zur Kaltumformung, so dass auf eine komplexe Warmumformanlage, wie sie beim Presshärten notwendig ist, verzichtet werden kann.

Ein Stahlband zur Herstellung eines Vorproduktes (Band, Blech, Rohr) kann aus dem Stahl gemäß folgender Verfahrensschritte hergestellt werden:
- Erschmelzen einer Stahlschmelze enthaltend (in Gewichts-%): C: 0,0005 bis 0,9, Mn: mehr als 3,0 bis 12, Rest Eisen einschließlich unvermeidbarer stahlbegleitender Elemente, mit optionaler Zulegierung von einem oder mehreren der folgenden Elemente (in Gewichts-%):
   Al: bis 10, Si: bis 6, Cr: bis 6, Nb: bis 1,5, V: bis 1,5, Ti: bis 1,5, Mo: bis 3, Cu: bis 3, Sn: bis 0,5, W: bis 5, Co: bis 8, Zr: bis 0,5, Ta: bis 0,5, Te: bis 0,5, B: bis 0,15, P: max. 0,1, S: max. 0,1, N: max. 0,1, Ca: bis 0,1.
- Vergießen der Stahlschmelze zu einem Vorband mittels eines endabmessungsnahen horizontalen oder vertikalen Bandgießverfahrens oder Vergießen der Stahlschmelze zu einer Bramme oder Dünnbramme mittels eines horizontalen oder vertikalen Brammen- oder Dünnbrammengießverfahrens,
- Wiedererwärmen der Bramme oder Dünnbramme auf 1050 °C bis 1250 °C und anschließendes Warmwalzen der Bramme oder Dünnbramme zu einem Warmband oder Grobblech oder Wiedererwärmen des endabmessungsnah erzeugten Vorbandes, insbesondere mit einer Dicke größer als 3 mm, auf 1000 °C bis 1200 °C und anschließendes Warmwalzen des Vorbandes zu einem Warmband oder Grobblech oder Warmwalzen des Vorbandes ohne Wiedererwärmen aus der Gießhitze zu einem Warmband oder Grobblech mit optionalem Zwischenerwärmen zwischen einzelnen Walzstichen des Warmwalzens,
- Aufhaspeln des Warmbandes und optional des Grobblechs bei einer Haspeltemperatur zwischen 780 °C und Raumtemperatur,
- Optionales Glühen des Warmbandes oder Grobblechs mit folgenden Parametern:
   Glühtemperatur: 450 bis 900 °C, Glühdauer: 1 Minute bis 48 Stunden,
- Optionales Kaltwalzen des Warmbandes oder des endabmessungsnah erzeugten Vorbandes mit einer Dicke von kleiner 5 mm zu Kaltband,
- Optionales Glühen des Kaltbandes mit folgenden Parametern:
   Glühtemperatur: 450 bis 900 °C, Glühdauer: 1 Minute bis 48 Stunden,
   ein Stahlflachprodukt mit einer guten Kombination von Festigkeits-, Dehnungs- und Umformeigenschaften, sowie einem erhöhten Widerstand gegenüber verzögerter Rissbildung und Wasserstoffversprödung, welches aufgrund seines Restaustenitgehalts im Gefüge bei mechanischer Beanspruchung einen TRIP- und/oder TWIP-Effekt aufweist.

## Patentansprüche

1. Verfahren zur Herstellung eines Bauteils durch Warmumformen eines Vorproduktes aus Stahl, bei dem das Vorprodukt auf eine Temperatur oberhalb von 60°C und unterhalb 450°C erwärmt und anschließend in diesem Temperaturbereich umgeformt wird, wobei das Bauteil eine Mindestzugfestigkeit von 700 MPa bei gleichzeitig hoher Bruchdehnung A80 in % aufweist, wobei das Vorprodukt folgende Legierungszusammensetzung in Gewichts-% aufweist:
C: 0,0005 bis 0,9
Mn: mehr als 3,0 bis 12
Rest Eisen einschließlich unvermeidbarer stahlbegleitender Elemente, mit optionaler Zulegierung von einem oder mehreren der folgenden Elemente (in Gewichts-%):
Al: bis 10
Si: bis 6
Cr: bis 6
Nb: bis 1,5
V: bis 1,5
Ti: bis 1,5
Mo: bis 3
Cu: bis 3
Sn: bis 0,5
W: bis 5
Co: bis 8
Zr: bis 0,5
Ta: bis 0,5
Te: bis 0,5
B: bis 0,15
P: max. 0,1
S: max. 0,1
N: max. 0,1
Ca: bis 0,1
wobei der Restaustenitanteil 5 % bis 80 % beträgt, der ganz oder teilweise während der Umformung erhalten bleibt.

2. Verfahren nach Anspruch 1, **dadurch gekennzeichnet, dass** die Erwärmung des Vorproduktes auf Warmumformtemperatur nur partiell erfolgt.

3. Verfahren nach Anspruch 1 oder 2, **dadurch gekennzeichnet, dass** das Vorprodukt in Bezug auf einzelne oder alle Elemente folgende Legierungszusammensetzung in Gewichts-% aufweist:
C: 0,05 bis 0,42
Mn: > 5 bis < 10
Al: > 0,5 bis 3
Si: 0,05 bis 3, vorzugsweise > 0,1 bis 1,5
Cr 0,1 bis 4, vorzugsweise > 0,5 bis 2,5
Nb: 0,005 bis 0,4, vorzugsweise 0,01 bis 0,1
V: 0,005 bis 0,6, vorzugsweise 0,01 bis 0,3
Ti: 0,005 bis 0,6, vorzugsweise 0,01 bis 0,3
Mo: 0,005 bis 1,5, vorzugsweise 0,01 bis 0,6
Cu: < 0,5, vorzugsweise < 0,1
Sn: < 0,2, vorzugsweise < 0,05
W: 0,01 bis 3, vorzugsweise 0,2 bis 1,5
Co: 0,01 bis 5, vorzugsweise 0,3 bis 2
Zr: 0,005 bis 0,3, vorzugsweise 0,01 bis 0,2
Ta: 0,005 bis 0,3, vorzugsweise 0,01 bis 0,1
Te: 0,005 bis 0,3, vorzugsweise 0,01 bis 0,1
B: 0,001 bis 0,08, vorzugsweise 0,002 bis 0,01
P: <0,04
S: <0,02
N: <0,05
Ca: 0,005 bis 0,1

4. Verfahren nach Anspruch 3, **dadurch gekennzeichnet, dass** die Erwärmung des Vorproduktes in einem Temperaturbereich von 350 bis unterhalb 450°C erfolgt.

5. Verfahren nach Anspruch 3, **dadurch gekennzeichnet, dass** die Erwärmung des Vorproduktes in einem Temperaturbereich von 60 bis unterhalb 350°C erfolgt.

6. Verfahren nach einem der Ansprüche 1 bis 5, **dadurch gekennzeichnet, dass** das Vorprodukt vor der Erwärmung mit einem metallischen oder lackartigen Überzug versehen wird.

7. Verfahren nach Anspruch 6, **dadurch gekennzeichnet, dass** der metallische Überzug Zn und/oder Mg und/oder Al und/oder Si enthält.

8. Verfahren nach Anspruch 7, **dadurch gekennzeichnet, dass** die Zn-Legierungen aus ZnMg, ZnAI, ZnNi, ZnFe, ZnCo oder ZnAICe bestehen.

9. Verfahren nach mindestens einem der Ansprüche 1 bis 8, **dadurch gekennzeichnet, dass** die Erwärmung auf Umformtemperatur induktiv, konduktiv oder mittels Strahlung oder durch Wärmeleitung im Umformwerkzeug erfolgt und die Abkühlung nach der Umformung an Luft oder technisch beschleunigt mittels bewegter Gase, Luft oder flüssiger Medien im, oder außerhalb des Umformwerkzeugs durchgeführt wird.

10. Verfahren nach mindestens einem der Ansprüche 1 bis 9, **dadurch gekennzeichnet, dass** als Vorprodukt eine Blechplatine, insbesondere bestehend aus Warmband oder Kaltband, oder ein Rohr verwendet wird.

11. Verfahren nach Anspruch 10, **dadurch gekennzeichnet, dass** das Rohr ein nahtlos warmgewalztes oder ein aus Warm- oder Kaltband hergestelltes geschweißtes Rohr ist, welches wahlweise eine Innen- und/oder Außenbeschichtung aufweist und/oder welches im Zuge der Warmumformung einem oder mehrfachen Zieh- und/oder Glühprozessen unterzogen wird.

12. Verfahren nach Anspruch 1 bis 11, **dadurch gekennzeichnet, dass** das Vorprodukt nach der Warmumformung einer abschließenden Kaltumformung unterzogen wird.

13. Verfahren nach mindestens einem der Ansprüche 1 bis 12, **dadurch gekennzeichnet, dass** das Bauteil ein Produkt aus Zugfestigkeit x Bruchdehnung mit mindestens folgenden Werten in MPa % aufweist:
Rm von 700 bis 800 MPa: Rm x A80 ≥ 15400 bis zu 50000
Rm von über 800 bis 900 MPa: Rm x A80 ≥ 14400 bis zu 50000
Rm von über 900 bis 1100 MPa: Rm x A80 ≥ 13500 bis zu 45000
Rm von über 1100 bis 1200 MPa: Rm x A80 ≥ 13200 bis zu 45000
Rm von über 1200 bis 1350 MPa: Rm x A80 ≥ 11200 bis zu 45000
Rm von über 1350 bis 1800 MPa: Rm x A80 ≥ 8000 bis zu 45000
Rm von über 1800 MPa: Rm x A80 ≥ 4000 bis zu 30000.

## Claims

1. Method for producing a component by hot-forming a pre-product consisting of steel, in which the pre-product is heated to a temperature above 60°C and below 450°C and subsequently is formed in this temperature range, wherein the component has a minimum tensile strength of 700 MPa with at the same time a high elongation at fracture A80 in %, wherein the pre-product has the following alloy composition in wt.%:
C: 0.0005 to 0.9
Mn: more than 3.0 to 12,
with the remainder being iron including unavoidable steel-associated elements, with optional addition by alloying of one or more of the following elements (in wt.%):
Al: up to 10
Si: up to 6
Cr: up to 6
Nb: up to 1.5
V: up to 1.5
Ti: up to 1.5
Mo: up to 3
Cu: up to 3
Sn: up to 0.5
W: up to 5
Co: up to 8
Zr: up to 0.5
Ta: up to 0.5
Te: up to 0.5
B: up to 0.15
P: max. 0.1
S: max. 0.1
N: max. 0.1
Ca: up to 0.1
wherein the residual austenite proportion is 5% to 80% which is retained completely or
partially during the forming procedure.

2. Method as claimed in claim 1, **characterised in that** the pre-product is only partially heated to hot-forming temperature.

3. Method as claimed in claim 1 or 2, **characterised in that** the pre-product has, in relation to individual or all elements, the following alloy composition in wt.%:
C: 0.05 to 0.42
Mn: > 5 to < 10
Al: > 0.5 to 3
Si: 0.05 to 3, preferably > 0.1 to 1.5
Cr: 0.1 to 4, preferably > 0.5 to 2.5
Nb: 0.005 to 0.4, preferably 0.01 to 0.1
V: 0.005 to 0.6, preferably 0.01 to 0.3
Ti: 0.005 to 0.6, preferably 0.01 to 0.3
Mo: 0.005 to 1.5, preferably 0.01 to 0.6
Cu: < 0.5, preferably < 0.1
Sn: < 0.2, preferably < 0.05
W: 0.01 to 3, preferably 0.2 to 1.5
Co: 0.01 to 5, preferably 0.3 to 2
Zr: 0.005 to 0.3, preferably 0.01 to 0.2
Ta: 0.005 to 0.3, preferably 0.01 to 0.1
Te: 0.005 to 0.3, preferably 0.01 to 0.1
B: 0.001 to 0.08, preferably 0.002 to 0.01
P: < 0.04
S: < 0.02
N: < 0.05
Ca: 0.005 to 0.1.

4. Method as claimed in claim 3, **characterised in that** the pre-product is heated in a temperature range of 350 to below 450°C.

5. Method as claimed in claim 3, **characterised in that** the pre-product is heated in a temperature range of 60 to below 350°C.

6. Method as claimed in any one of claims 1 to 5, **characterised in that** the pre-product is provided with a metallic or lacquer-like coat prior to the heating procedure.

7. Method as claimed in claim 6, **characterised in that** the metallic coat contains Zn and/or Mg and/or Al and/or Si.

8. Method as claimed in claim 7, **characterised in that** the Zn alloys consist of ZnMg, ZnAI, ZnNi, ZnFe, ZnCo or ZnAlCe.

9. Method as claimed in at least one of claims 1 to 8, **characterised in that** the procedure of heating to forming temperature is effected inductively, conductively or by means of radiation, or by heat conduction in the forming tool and the cooling procedure is performed, after the forming procedure, in air or in a technically accelerated manner by means of moving gases, air or liquid media in or outside the forming tool.

10. Method as claimed in at least one of claims 1 to 9, **characterised in that** the pre-product used is a sheet metal plate, in particular consisting of hot strip or cold strip, or is a pipe.

11. Method as claimed in claim 10, **characterised in that** the pipe is a seamlessly hot-rolled pipe or a welded pipe which is produced from hot strip or cold strip and which optionally has an inner coating and/or an outer coating and/or which, during the course of the hot-forming procedure, is subjected to one or multiple drawing and/or annealing processes.

12. Method as claimed in claims 1 to 11, **characterised in that**, after the hot-forming procedure, the pre-product is subjected to a final cold-forming procedure.

13. Method as claimed in at least one of claims 1 to 12, **characterised in that** the component has a product of tensile strength x elongation at fracture with at least the following values in MPa %:
Rm of 700 to 800 MPa: Rm x A80 ≥ 15400 up to 50000
Rm of over 800 to 900 MPa: Rm x A80 ≥ 14400 up to 50000
Rm of over 900 to 1100 MPa: Rm x A80 ≥ 13500 up to 45000
Rm of over 1100 to 1200 MPa: Rm x A80 ≥ 13200 up to 45000
Rm of over 1200 to 1350 MPa: Rm x A80 ≥ 11200 up to 45000
Rm of over 1350 to 1800 MPa: Rm x A80 ≥ 8000 up to 45000
Rm of over 1800 MPa: Rm x A80 ≥ 4000 up to 30000.

## Revendications

1. Procédé de fabrication d'un composant par formage à chaud d'un produit semi-fini en acier, procédé dans lequel le produit semi-fini est chauffé à une température supérieure à 60 °C et inférieure à 450 °C puis mis en forme dans cette plage de températures, le composant présentant une résistance à la traction minimale de 700 MPa tout en présentant un allongement à la rupture élevé A80 en %, le produit semi-fini ayant la composition d'alliage suivante en % en poids :
C: 0,0005 à 0,9
Mn: plus de 3,0 à 12
le reste étant du fer, y compris les éléments d'accompagnement de l'acier inévitables, avec ajout facultatif d'un ou plusieurs des éléments suivants (en % en poids):
Al: jusqu'à 10
Si: jusqu'à 6
Cr: jusqu'à 6
Nb: jusqu'à 1,5
V: jusqu'à 1,5
Ti: jusqu'à 1,5
Mo: jusqu'à 3
Cu: jusqu'à 3
Sn: jusqu'à 0,5
W: jusqu'à 5
Co: jusqu'à 8
Zr: jusqu'à 0,5
Ta: jusqu'à 0,5
Te: jusqu'à 0,5
B: jusqu'à 0,15
P: 0,1 max.
S: 0,1 max.
N: 0,1 max.
Ca: jusqu'à 0,1
la teneur en austénite restante étant de 5 % à 80 %, qui est totalement ou partiellement retenue pendant le formage.

2. Procédé selon la revendication 1, **caractérisé en ce que** le chauffage du produit semi-fini à la température de formage à chaud n'est effectué que partiellement.

3. Procédé selon la revendication 1 ou 2, **caractérisé en ce que** le produit semi-fini par rapport à chacun des éléments ou à tous les éléments, a la composition d'alliage suivante en % en poids:
C: 0,05 à 0,42
Mn: > 5 à < 10
Al: > 0,5 à 3
Si: 0,05 à 3, de préférence> 0,1 à 1,5
Cr: 0,1 à 4, de préférence > 0,5 à 2,5
Nb: 0,005 à 0,4, de préférence 0,01 à 0,1
V: 0,005 à 0,6, de préférence 0,01 à 0,3
Ti: 0,005 à 0,6, de préférence 0,01 à 0,3
Mo: 0,005 à 1,5, de préférence 0,01 à 0,6
Cu: < 0,5, de préférence < 0,1
Sn: < 0,2, de préférence < 0,05
W: 0,01 à 3, de préférence 0,2 à 1,5
Co: 0,01 à 5, de préférence 0,3 à 2
Zr: 0,005 à 0,3, de préférence 0,01 à 0,2
Ta: 0,005 à 0,3, de préférence 0,01 à 0,1
Te: 0,005 à 0,3, de préférence 0,01 à 0,1
B: 0,001 à 0,08, de préférence 0,002 à 0,01
P: < 0,04
S: < 0,02
N: < 0,05
Ca: 0,005 à 0,1

4. Procédé selon la revendication 3, **caractérisé en ce que** le chauffage du produit semi-fini est effectué dans une plage de températures de 350 à moins de 450 °C.

5. Procédé selon la revendication 3, **caractérisé en ce que** le chauffage du produit semi-fini est effectué dans une plage de températures de 60 à moins de 350 °C.

6. Procédé selon l'une des revendications 1 à 5, **caractérisé en ce que** le produit semi-fini est pourvu d'un revêtement métallique ou de type vernis avant chauffage.

7. Procédé selon la revendication 6, **caractérisé en ce que** le revêtement métallique contient du Zn et/ou Mg et/ou Al et/ou Si.

8. Procédé selon la revendication 7, **caractérisé en ce que** les alliages Zn comprennent du ZnMg, ZnAl, ZnNi, ZnFe, ZnCo ou ZnAlCe.

9. Procédé selon l'une au moins des revendications 1 à 8, **caractérisé en ce que** le chauffage à la température de formage est effectué par induction, par conductivité ou par rayonnement ou par conduction thermique dans l'outil de formage et le refroidissement après le formage est effectué dans l'air ou de manière techniquement accélérée au moyen de gaz, d'air ou de milieux liquides en mouvement à l'intérieur ou à l'extérieur de l'outil de formage.

10. Procédé selon l'une au moins des revendications 1 à 9, **caractérisé en ce qu'**une plaque de tôle, comprenant notamment un feuillard chaud ou froid, ou un tube est utilisé comme produit semi-fini.

11. Procédé selon la revendication 10, **caractérisé en ce que** le tube est un tube sans soudure laminé à chaud ou un tube soudé fabriqué à partir d'un feuillard chaud ou froid, lequel tube comporte éventuellement un revêtement intérieur et/ou extérieur et/ou est soumis à un ou plusieurs processus d'étirage et/ou de recuit en cours du formage à chaud.

12. Procédé selon les revendications 1 à 11, **caractérisé en ce que** le produit semi-fini est soumis à un formage à froid final après le formage à chaud.

13. Procédé selon l'une au moins des revendications 1 à 12, **caractérisé en ce que** le composant est un produit de la résistance à la traction x allongement à la rupture ayant au moins les valeurs suivantes en % en MPa:
Rm de 700 à 800 MPa: Rm x A80 > 15400 à 50000
Rm de plus de 800 à 900 MPa: Rm x A80 > 14400 à 50000
Rm de plus de 900 à 1100 M Pa: Rm x A80 > 13500 à 45000
Rm de plus de 1100 à 1200 MPa: Rm x A 80 > 13200 à 45000
Rm de plus de 1200 à 1350 MPa: Rm x A80 > 11200 à 45000
Rm de plus de 1350 à 1800 MPa: Rm x A80 > 8000 à 45000
Rm de plus de 1800 MPa: Rm x A80 > 4000 à 30000.
